# EUROPEAN PATENT SPECIFICATION

(11) **EP 2 474 748 B1**
(45) Date of publication and mention of the grant of the patent: **16.03.2016**
(21) Application number: 11150522.8
(22) Date of filing: 10.01.2011
(51) Int. Cl.: F16B 13/12, F16B 13/00, F16B 13/08, F16B 13/06

(54) **Metal wall anchor for a screw**
Metallwandanker für eine Schraube
Ancrage de mur métallique pour une vis

(43) Date of publication of application: 11.07.2012
(73) Proprietor: Black & Decker, Inc., Newark, DE 19711 (US)
(72) Inventor: Villatte, Didier, 91130 Ris-Orangis (FR)
(74) Representative: Bell, Ian Stephen

(56) References cited:
- DE-A1- 3 416 797
- GB-A- 2 379 722
- US-A- 2 147 357

## Description

The present invention relates to a metal wall anchor for a screw, the wall anchor comprising a longitudinal axis, a cylindrical head collar located at one end, a cylindrical tail collar located at an opposite end, and a plurality of plastically deformable substantially longitudinal bars which connect the head collar to the tail collar. The head collar has an internal free passage for a threaded shaft of a screw and a transverse head flange for abutment with a transverse head of a screw. The tail collar has an internal free passage for a threaded shaft of a screw and a nut for engagement with a threaded shaft of a screw. The bars are uniformly distributed about an internal free passage for a threaded shaft of a screw. The internal free passages of the wall anchor are substantially coaxial with the axis.

This type of metal wall anchor, which is manufactured by punching, cutting and bending a sheet metal strip of uniform thickness, is described in patent publication No.s GB-A-2 140 889, GB-A-2 379 722 and EP-A-1 338 803.

The wall anchors of GB-A-2 140 889 and GB-A-2 379 722 are for securing articles to a hollow wall of the type widely used as partition walls in industrial buildings, office blocks and domestic residences. A hole is drilled through the skin of the hollow wall, usually plasterboard or hardboard, at the accessible side and the wall anchor is inserted by hand. Next, the wall anchor is set by pulling the tail collar towards the head collar to bend and collapse the plastically deformable bars. The pulling can be effected by turning the screw with a screw driver. Alternatively, the screw can be pulled by a setting tool of the type described by patent publication No. GB-A-2 289 006. Upon collapse, the plastically deformable bars spread from the axis in the manner of the spokes of an umbrella to hold the skin of the hollow wall against the transverse head flange of the head collar. The screw is subsequently re-used to secure the article to the hollow wall.

The wall anchor of EP-A-1 338 803 is capable of securing articles to hollow walls and solid walls i.e. a wall made of brick. A hole is drilled at the accessible side of a wall and the wall anchor is inserted by hand. Next, the wall anchor is set by pulling the tail collar towards the head collar. In the case of a hollow wall, the plastically deformable bars collapse, and spread from the axis in the manner of the spokes of an umbrella, to hold the skin of against the transverse head flange of the head collar. In the case of a solid wall, the plastically deformable bars rest against the wall inside the hole with sufficiently great force and contact pressure to resist withdrawal of the wall anchor. The screw is subsequently re-used to secure the article to the hollow wall.

Whilst these types of metal wall anchor may be reliable and effective they suffer from certain drawbacks. One such drawback is that certain stages of the manufacturing process require pre-forming the nut with means for engagement with a threaded shaft of a screw.

In the case of the wall anchors disclosed by GB-A-2 140 889 and EP-A-1 338 803, a screw thread must be formed inside the nut. This involves extruding the metal into a tubular skirt coaxial with the axis. Next, the tubular skirt is subjected to thread-cutting, also known as tapping, with a separate thread cutting machine, in order to form an internal screw thread. The screw thread must axially long enough for adequate engagement with the threaded shaft of the screw. The tapping process requires lubrication too. Metal strips pre-coated with anti-corrosion material cannot be used because tapping eliminates the coating and its anti-corrosive properties. As such, a separate anti-corrosion coating process must be applied to the wall anchor after tapping and cleaning processes. This is because a corroded thread impairs operation of the wall anchor and is to be avoided. Also, the wall anchor must be assembled with a screw of specific thread pitch to match that of the nut. This limits choice and adds cost.

In the case of the wall anchors disclosed by GB-A-2 379 722, a proper screw thread is not formed inside the nut. Instead, a radial slit is cut into each of two circular members folded upon the tail collar of the wall anchor. According to GB-A-2 379 722, these radial slits are bent upwardly slantingly to form a guide for guiding the thread of a screw. This requires additional stages to the manufacturing process in order to form and align the radial slits.

Another drawback of this type of metal wall anchor is a weakness in the connection between the nut and the tail collar in certain situations.

In the case of the wall anchors of GB-A-2 140 889 and EP-A-1 338 803, the nut is attached to the tail collar by a web on one side and, at the other diametrically opposed side, by an anchor, or dove-tail lug, folded into a complementary recess in the abutting edges of the adjacent tail collar. Certain applications require high forces to deform the bars sufficiently to gain a good grip of a work-piece i.e. setting the wall anchor in a blind hole in solid material. If a setting tool is not at hand, then a screw driver cannot deliver enough torque to turn the screw to properly set the wall anchor. An alternative is a power tool, like, for example, an electric screw driver or a drill driver. Use of such power tools may be desirable because they can set a wall anchor quickly and easily. This is a significant benefit when several wall anchors need to be set. However, such power tools can deliver torque above a threshold sustainable by the connection between nut and tail collar which sheers before the bars are fully deformed and the wall anchor is properly set. When the connection sheers the nut spins with the screw and the bars can deform no more. The wall anchors of GB-A-2 379 722 have the same drawback above because the nut, in the form of two circular members, is connected to the tail collar by two diametrically opposed webs which risk sheering in the same way.

An additional drawback of the wall anchors of GB-A-2 379 722 is that the middle of a 180° rotational space between webs is occupied by the abutting edges at the join of the tail collar. Tensile forces acting along the screw tend to fold the circular members inside the tail collar. The tail collar bursts open at its join and the circular members collapse inside. The webs offer little or no resistance because they are at right angles to the radial direction in which the tail bursts open.

The aim of the present invention is to remedy these drawbacks and, to this end, the present invention proposes a wall anchor of the type indicated in the preamble, characterised in that the nut is a stack of three rings arranged substantially transverse the axis upon an annular end face of the tail collar, wherein an internal hole through each respective ring is substantially coaxial with the axis, and wherein a side of each ring is connected to the tail collar by a respective web, the webs being arranged at equiangular intervals about the longitudinal axis of the anchor and being integral with the rings and the tail collar.

The present invention deletes the separate steps of the manufacturing process associated with pre-forming the nut with means for engagement with a threaded shaft of a screw. This has the advantage of removing the additional machinery, components, time and cost involved. The stack of at least three rings needs no such pre-forming in order to be able to engage with a threaded shaft of a screw. The combined axial thickness of the at least three rings provides adequate engagement with the threaded shaft of the screw.

The present invention has a stronger connection between the nut and the tail collar. That is because the at least three rings have at least three respective webs. That is an at least 50% increase on prior art wall anchors discussed above. As such, the wall anchor may be set using an electric screw driver or drill driver and yet withstand the additional torque delivered by such a power tool without sheering the connection between the rings and the tail collar. As mentioned above, use of such a power tool is often desirable because it saves time and effort. The wall anchor of the present invention may be set using a screw driver or a setting tool as well.

Preferably, the webs of the rings are arranged at equiangular intervals about the axis. This evenly distributes the rings in the wall anchor's sheet metal blank and avoids overcrowding. It ensures that 120° rotational space exists between webs of the wall anchor. As such, radial forces in adjacent webs have a component tending to unite the abutting edges at the join of the tail collar and to resist the tail collar bursting open to let the rings collapse inside.

Preferably, the length of each web corresponds to the axial distance between the annular end face of the tail collar and the respective ring to which each web is connected. This ensures that the rings are neatly and compactly stacked substantially transverse the axis.

Preferably, the webs are integral with the rings and the tail collar. This avoids the need for additional machinery and manufacturing steps to connect the rings and the tail collar i.e. welding the rings to the tail collar.

Preferably, each ring of the stack has a recess to accommodate the web of the or each ring subsequently stacked upon the annular end face of the tail collar. The webs are neatly accommodated within the outer diameter of the rings and the tail collar. This avoids an oversized hole in the wall to accommodate a wall anchor with radially protruding webs. Also, the webs of rings axially further from the tail collar brace the axially closer rings against torque applied a turning screw. This is particularly so for ring arranged upon the annular end face. It is braced by all the webs to prevent it collapsing inside the tail collar. The webs form a protective cage around the stack of rings which strengthens connection to the tail collar.

Preferably, the rings have flat annular faces arranged substantially transverse the axis. The rings stack evenly and are easily cut from sheet metal.

Preferably, the nut is a stack of three rings. This combines efficient use of sheet metal and adequate engagement with the threaded shaft of the screw.

Preferably, the head collar has at least one gripping member. The gripping member is used to penetrate and grip surrounding wall material and prevent the wall anchor rotating when an article is being screwed to the wall or the wall anchor is being set with a screwdriver. The gripping member may protrude radially from the head collar or axially from the transverse head flange in the direction of the tail collar.

Preferably, the bars are plastically deformable to bend away from the axis. The bars spread like the spokes of an umbrella to hold the skin of a hollow wall against the transverse head flange of the head collar. Alternatively, the bars rest forcefully against the wall inside the hole of a solid wall to prevent withdrawal.

Preferably, the metal wall anchor is made of one piece of sheet metal. This avoids the need for additional machinery and manufacturing steps to connect the various components of the wall anchor i.e. by welding, adhesive, or inter-connection.

Further, the present invention proposes an assembly of a metal wall anchor as set out in the previous paragraphs and a screw with a threaded shaft disposed in the internal free passages of the wall anchor, wherein the screw has a transverse head for abutment with the transverse head flange of the head collar and the threaded shaft has a tapered end for leading the threaded shaft into engagement with the at least three rings as the screw is turned.

The wall anchors of GB-A-2 140 889 and EP-A-1 338 803 must use a particular screw with a thread pitch to match the thread tapped into the nut. The assembly of the present invention suffers from no such constraint because it can use any type of screw provided it has a sufficiently long tapered threaded shaft. The tapered shaft automatically aligns itself and engages with the rings as the screw rotates.

Several types of standard screw with a tapered threaded shaft may be used in the assembly of the present invention i.e. a wood screw, a sheet metal screw or a self-tapping screw. Preferably, the screw is a wood screw. A wood screw's threaded shank has a relatively coarse pitch and can grip the wall anchor's sheet metal between adjacent thread crests. This fosters good engagement with the rings. Wood screws are commodities commonly available in virtually all conceivable shaft lengths and thread diameters. A wood screw is an ideal and inexpensive component for assembly with the wall anchor. It also avoids the expense and space of storing specially adapted screws.

Furthermore, the present invention proposes a method of making a wall anchor as set out in the previous paragraphs, comprising the steps of (i) progressively punching and cutting a sheet metal strip to form outline shapes of the head collar, the transverse head flange, the longitudinal bars, the tail collar and the at least three rings; (ii) progressively bending the head collar, the longitudinal bars and the tail collar about the longitudinal axis to form a substantially cylindrical shape; (iii) folding the head flange to lie substantially transverse the axis; and (iv) sequentially folding each of the at least

three rings about a respective web to form a stack of at least three rings arranged substantially transverse the axis upon an annular end face of the tail collar.

Preferably, the sheet metal is pre-coated with anti-corrosion material. This eliminates an anti-corrosion coating process from the method of making a wall anchor. This saves time and materials and ultimately reduces the cost of the wall anchor.

There now follows a detailed description of an embodiment of a wall anchor for a screw according to the present invention, to be read with reference to the accompanying drawings of which:
Figure 1 is a side elevation view of a wall anchor for a screw;
Figure 2 is an opposite side elevation view of the wall anchor of Figure 1;
Figure 3 is an end elevation view of the wall anchor of Figure 1;
Figure 4 is an opposite end elevation view of the wall anchor of Figure 1;
Figure 5 is a cross-sectional view III-III of the wall anchor of Figure 1 assembled with a screw;
Figure 6 is larger scale view, partially in section, of a head collar of the wall anchor of Figure 1;
Figure 7 is a larger scale view, partially in section, of a tail collar of the wall anchor of Figure 1;
Figure 8 is a larger scale view of the tail collar from an opposite side to Figure 7;
Figure 9 is a plan view of a sheet metal strip shown after punching and cutting and before bending into the shape of the wall anchor of Figure 1; and
Figure 10 is a side view of the wall anchor of Figure 1 after it has been set in a panel of a hollow wall.

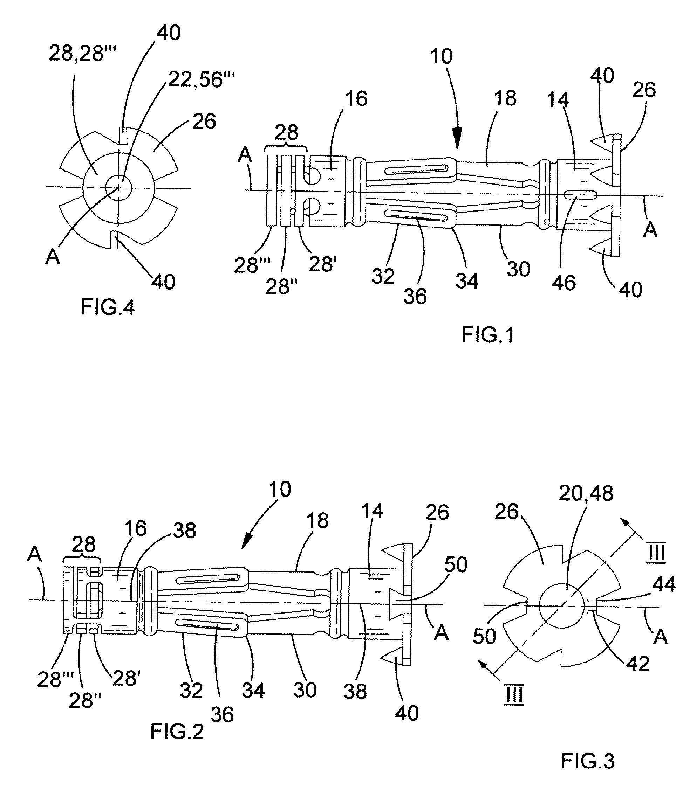

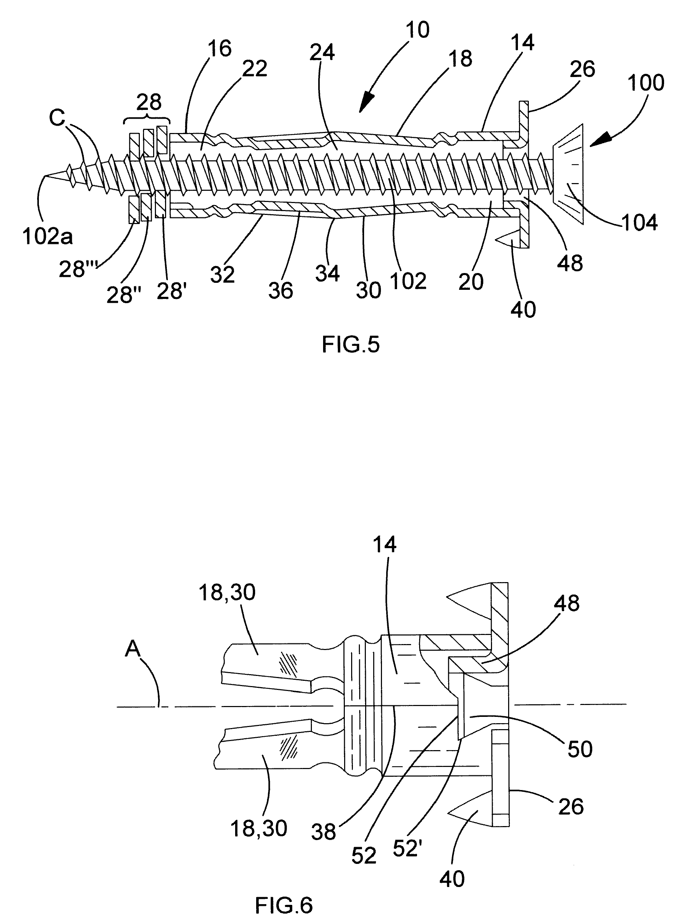

Referring to Figures 1 to 5, a wall anchor 10 is punched and cut from a sheet metal strip 12 and bent into a hollow approximately cylindrical shape having a longitudinal axis A. The wall anchor comprises a cylindrical head collar 14 located at one end, a cylindrical tail collar 16 located at an opposite end and four plastically deformable longitudinal bars 18 which connect the head collar to the tail collar.

The head collar 14 and the tail collar 16 have internal free passages 20,22 for a threaded shaft 102 of a screw 100. The bars 18 are uniformly distributed about an internal free passage 24 for the threaded shaft of the screw. The internal free passages 22,24,26 of the wall anchor are substantially coaxial with the axis A.

The head collar 14 has a head flange 26 at the one end for abutment with a transverse head 104 of the screw. The tail collar 16 has a nut 28 at the opposite end for engagement with the threaded shaft 102 of the screw 100.

The bars 18 of the wall anchor all have the same shape. Each bar has a narrow part 30 joined to the head collar 14 and a broader, parallel sided, part 32 joined to the tail collar 16. The narrow part 30 of each bar 18 tapers slightly in width towards shoulders 34 at which its meets the broader part 32. Each broader part 32 has a central longitudinally disposed rib 36 pressed into it i.e. the sheet metal is deformed to provide an elongated ridge on one side and corresponding depression on the other wherein the depression faces inwardly towards the axis A. The depression makes the broader part 32 stiffer than the narrow part 30.

Each bar 30 is shaped longitudinally so that, traversing the bar from the head collar 14 to the tail collar 16, the narrow part 30 is inclined radially outward to meet the shoulder 34. Here the bar folds and the broader part 32 is inclined radially inward to meet the tail collar 16. A circle circumscribing the bars 18 at the shoulders 34 is the same as the outer diameters of the head collar 14 and the tail collar 16.

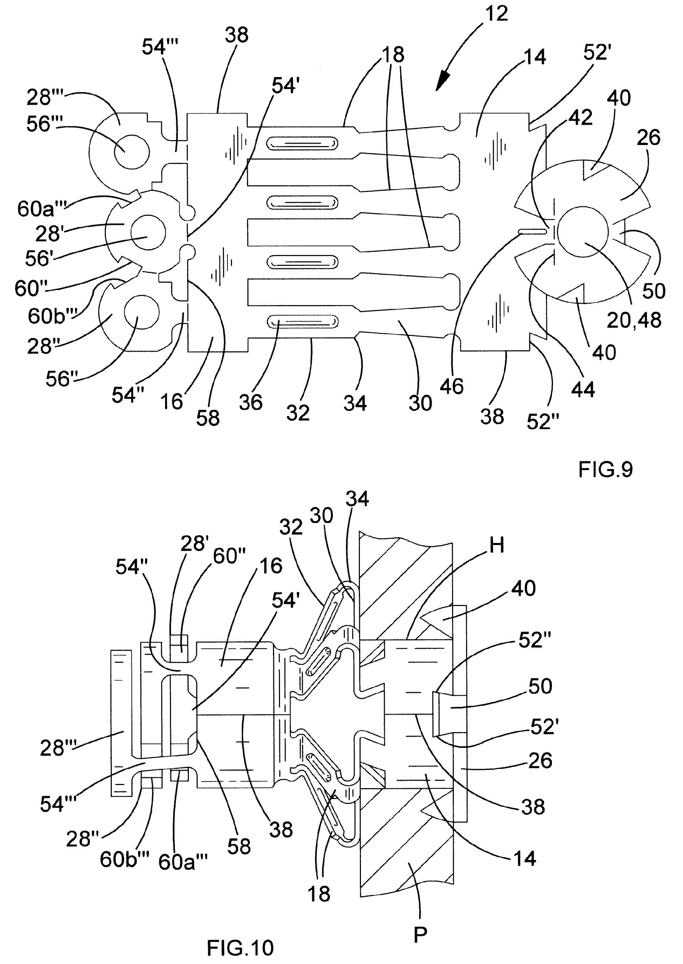

Referring to Figure 9, manufacture of the wall anchor 10 begins with a flat sheet metal strip 12 substantially wider than the length of the wall anchor. The sheet metal is progressively cut and punched to provide the shaped bars 18 integral with flat portions of sheet metal that ultimately form the head and tail collars 14,16. Next, these parts are bent round the common longitudinal axis A until the edges of the head and tail collars 14,16 meet along a joining line 38 which is shown in Figure 1. Meanwhile, the head flange 26 has been punched, cut and bent to desired shape at the one end of the wall anchor. Three rings 28',28",28"' have been punched, cut and bent to the desired shape at the other opposite end. The three rings combine to form the nut 28 as is described in more detail below.

Referring to Figures 1 to 6 and 9, the head flange 26 is a flat roughly circular shape with a larger diameter than the head collar 14. The head flange is orientated transverse the axis A. The head flange has a wide margin from which two prongs 40 are punched out to project at right angles to the head flange and towards the tail collar 16. When the wall anchor is located in a hole in a wall the prongs penetrate and grip the surrounding material to prevent the wall anchor rotating. The head flange 26 is connected to the head collar 14 by a narrow bridge piece 42 bent at right angles along a hinge line 44. To ensure that the right angled bend occurs at the

selected hinge line 44 the metal strip is indented deeply along this line on the inside and the bridge piece 42 is stiffened by a longitudinal rib 46 pressed into it.

While the head flange 26 is still flat in the metal strip, a central hole is punched out and extruded to form a hollow tubular skirt 48. When the head flange is bent about the hinge line 44 the tubular skirt 48 comes to lie coaxially with the axis A. The head flange 26 abuts the end of the head collar 14. A dovetail-shaped lug 50 diametrically opposite the bridge piece 42 and projecting at right angles to the head flange 26 is received within an undercut recess 52 provided in part by a rebate 52' in the head collar at one side of the joining line 38 and in part by a rebate 52" symetrically disposed at the other side of the joining line 38.

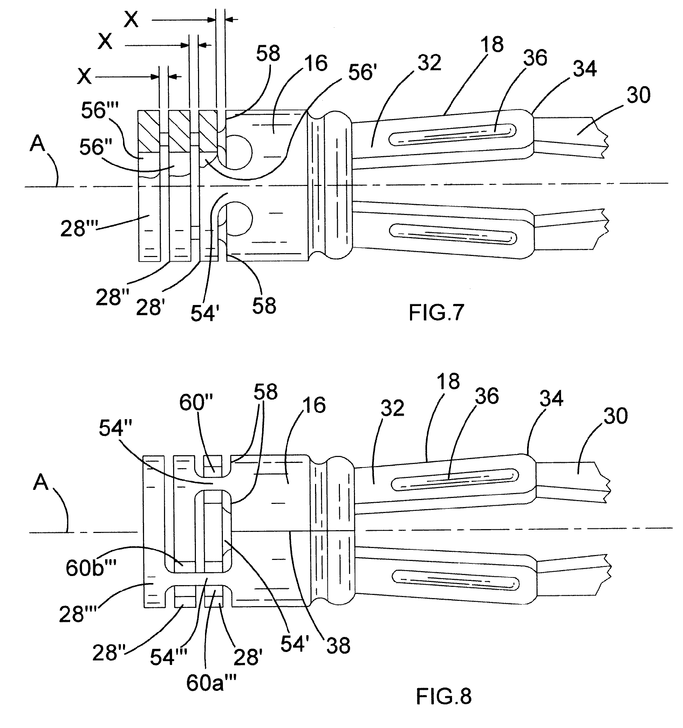

Referring to Figures 1 to 9, each ring 28',28",28"' has a respective web 54',54",54'" on one side integrally connected to the flat portion of sheet metal that ultimately forms the tail collar 16. Each ring is cut from the sheet metal with a respective internal circular hole 56',56",56'" punched through it. Each ring is generally annular and resembles a plain washer due to its flatness. The rings have the same outer diameter as the tail collar to which they are attached by the webs. The tail collar 16 has an annular end face 58.

The three rings are stacked transverse the axis A upon the annular end face 58 of the tail collar. The bottom ring 28' of the stack is bent about the web 54' to lie upon the annular end face 58 with its internal hole 56' coaxial with the axis A. The middle ring 28" of the stack is bent about the web 54" to lie upon the bottom ring 28' with its internal hole 56'" coaxial with the axis A. The top ring 28'" of the stack is bent about the web 54" to lie upon the middle ring 28" with its internal hole 56'" coaxial with the axis A. The length of each web corresponds to the axial distance between the annular end face of the tail collar and the respective ring to which each web is connected. As such, the bottom ring 28' has the shortest web 54', the middle ring 28" has the intermediate length web 28", and the top ring 28'" has the longest web 54"'. The different lengths of the webs maintain a small transverse gap X of approximately 0.3mm between the bottom ring 28' of the stack and the annular end face, between the bottom ring 28' and the middle ring 28" of the stack, and between the middle ring 28" and the top ring 28'" of the stack. The stack of three rings 28',28",28'" is the nut 28 for engagement with the threaded shaft 102 of the screw.

The webs 54',54",54"' are arranged at 120° rotational intervals about the axis A when viewed from the opposite end of the tail collar 16. The webs are accommodated within the outer diameter of the stack of rings and the tail collar. Each ring has a peripheral recess to accommodate the web of the, or each, ring subsequently stacked upon it. As such, the bottom ring 28' has a pair of recesses 60",60a'" to accommodate the webs 54",54'" of the middle and top rings 28",28"', respectively. The webs 54",54"' help to brace the bottom ring 28'. The middle ring 28" has a recess 60b'" to accommodate the web 54'" of the top ring 28"'. The web 54'" helps to brace the middle ring 28". The top ring 28'" has no such recess because no additional rings are stacked upon it. However, the skilled person in this technical field will easily recognise that additional rings may be stacked upon the top ring provided that they are attached to the tail collar by their own respective webs and the existing three rings each have a peripheral recess to accommodate those webs within the outer diameter of the stack of rings and the tail collar. The skilled person may choose to do this to enhance the capability of the nut 28 to engage a threaded shaft of a screw or because thinner sheet metal is used to make the wall anchor 10.

When assembling the wall anchor 10 and the screw 100, whether prior to, or during, setting the wall anchor, the advancing threaded shaft 102 engages the rings 28',28",28'" in sequential order, from the bottom ring 28' to the top ring 28"', as the screw rotates in the wall anchor. Engagement between the threaded shaft and the rings has two components: (a) the sheet metal of each of the rings wedges itself between thread crests C; and (b) the sheet metal which is not so wedged instead yields to the passing thread in a manner similar to tapping the rings. The small transverse gap X of about 0.3mm between adjacent rings 28',28",28'" and between the bottom ring 28' and the annular end face 58 of the tail collar 16 is to accommodate small axial and transverse movement caused by engagement between the threaded shaft 102 and the rings.

As will be seen from the foregoing description, the manufacture of the wall anchor 10 is economical due to its omission of thread tapping and grease cleaning stages. This has the added advantage of permitting the use of sheet metal strip pre-coated with anti-corrosive material.

The sheet metal used to manufacture the wall anchor 10 must be suitable for cutting and plastic deformation. An appropriate material is unalloyed mild steel. The sheet metal is between 0.7mm thick for smaller diameter wall anchors i.e. 7mm and 1 mm thick for larger diameter wall anchors up to 13mm.

Referring to Figure 10, the wall anchor 10 is shown set in plasterboard P of a hollow wall. Initially, a hole H is drilled through the plasterboard. The diameter of the hole H is just large enough to allow the wall anchor 10 to be pushed through it. The prongs 40 penetrate and grip the surface of the plasterboard possibly with the help of a few soft blows of a hammer. The wall anchor 10 is assembled with the screw 100 in engagement with the nut 28. The wall anchor may be set either by pulling on a wood screw with a setting tool or by turning the wood screw with a hand screw driver, an electric screwdriver or an electric drill driver. Setting of the wall anchor causes the bars 18 to plastically deform as follows. The bars bend away from the axis at their respective junctions with the head and tail collars 14,16 where the sheet metal is scored with a transverse groove to facilitate such bending. The bars collapse longitudinally by folding at the shoulders 34. The narrow parts 30 of the bars come to lie against the blind side of the plasterboard. The broader parts 32 of the bars serve as inclined struts to brace the bars 18 like the spokes of an umbrella. The wall anchor 10 is thus set and the screw 100 is re-used to secure an article to the hollow wall.

The nut 28 formed by the stack of three rings 28',28",28"' is part of a wall anchor set in a hollow wall like that disclosed by GB-A-2 140 889. The skilled person in this technical field will easily recognise that there is nothing to prevent the nut 28 from being part of a wall anchor set in a solid wall like that disclosed by EP-A-1 338 803. This is expressly contemplated because of the nut's enhanced strength and resistance to torque.

## Claims

1. A metal wall anchor (10) for a screw (100), the wall anchor comprising:
a longitudinal axis (A);
a cylindrical head collar (14) located at one end;
a cylindrical tail collar (16) located at an opposite end; and
a plurality of plastically deformable substantially longitudinal bars (18) which connect the head collar to the tail collar,
wherein the head collar has an internal free passage (20) for a threaded shaft (102) of a screw and a transverse head flange (26) for abutment with a transverse head (104) of a screw,
wherein the tail collar has an internal free passage (22) for a threaded shaft of a screw and a nut (28) for engagement with a threaded shaft of a screw,
wherein the bars are uniformly distributed about an internal free passage (24) for a threaded shaft of a screw, and
wherein the internal free passages (20,22,24) of the wall anchor are substantially coaxial with the axis,
**characterised in that** the nut is a stack of three rings (28',28",28"') arranged substantially transverse the axis upon an annular end face (58) of the tail collar, wherein an internal hole (56',56",56"') through each respective ring is substantially coaxial with the axis, wherein a side of each ring is connected to the tail collar by a respective web (54',54",54''), wherein the webs (54',54",54'') of the rings (28',28",28"') are arranged at equiangular intervals about the axis (A), and wherein the webs (54',54",54'') are integral with the rings (28',28",28'') and the tail collar (16).

2. A metal wall anchor as claimed in claim 1, wherein the length of each web (54',54",54'') corresponds to the axial distance between the annular end face (58) of the tail collar (16) and the respective ring (28',28",28"') to which each web is connected.

3. A metal wall anchor as claimed in any one of the previous claims, wherein each ring (28',28") of the stack has a recess (60",60a"',60b"') to accommodate the web (54",54''') of each ring (28",28''') subsequently stacked upon the annular end face (58) of the tail collar (16).

4. A metal wall anchor as claimed in any one of the previous claims, wherein the rings (28',28",28"') have flat annular faces arranged substantially transverse the axis (A).

5. A metal wall anchor as claimed in claim in any one of the previous claims, wherein the head collar (14) has at least one gripping member (40).

6. A metal wall anchor as claimed in any one of the previous claims, wherein the bars (18) are plastically deformable to bend away from the axis (A).

7. A metal wall anchor as a claimed in any one of the previous claims, wherein the metal wall anchor is made of one piece of sheet metal (12).

8. An assembly of a metal wall anchor (10) according to any one of claims 1 to 7 and a screw (100) with a threaded shaft (102) disposed in the internal free passages (20,22,24) of the wall anchor, wherein the screw has a transverse head (104) for abutment with the transverse head flange (26) of the head collar (14) and the threaded shaft has a tapered end (102a) for leading the threaded shaft into engagement with the three rings (28',28",28"') as the screw is turned.

9. The assembly as claimed in claim 8, wherein the screw (100) is a wood screw.

10. A method of making a wall anchor according to any one of claims 1 to 7, comprising the steps of:
(i) progressively punching and cutting a sheet metal strip (12) to form outline shapes of the head collar (14), the transverse head flange (26), the longitudinal bars (18), the tail collar (16) and the three rings (28',28",28"');
(ii) progressively bending the head collar, the longitudinal bars and the tail collar about the longitudinal axis to form a substantially cylindrical shape;
(iii) folding the head flange to lie substantially transverse the axis; and
(iv) sequentially folding each of the three rings about a respective web (54',54",54''') to form a stack of three rings arranged substantially transverse the axis (A) upon an annular end face (58) of the tail collar.

11. A method of making a wall anchor according to claim 10, wherein the sheet metal is pre-coated with anti-corrosion material.

## Patentansprüche

1. Ein Metallwandanker (10) für eine Schraube (100), der Wandanker umfassend:
eine Längsachse (A);
eine zylindrische Kopfmanschette (14) angeordnet an einem Ende;
eine zylindrische Endmanschette (16) angeordnet an einem gegenüberliegenden Ende; und
eine Mehrzahl von plastisch verformbaren im Wesentlichen länglichen Stäben (18), die die Kopfmanschette mit der Endmanschette verbinden,
wobei die Kopfmanschette einen internen freien Durchgang (20) für einen Gewindeschaft (102) einer Schraube und einen transversalen Kopfflansch (26) zur Anlage mit einem transversalen Kopf (104) einer Schaube aufweist,
wobei die Endmanschette einen internen freien Durchgang (22) für einen Gewindeschaft einer Schraube und eine Mutter (28) zum Verbinden mit einem Gewindeschaft einer Schraube aufweist,
wobei die Stäbe in einem internen freien Durchgang (24) für einen Gewindeschaft einer Schraube gleichmäßig verteilt sind, und
wobei die internen freien Durchgänge (20, 22, 24) des Wandankers im Wesentlichen koaxial mit der Achse sind,
**dadurch gekennzeichnet, dass** die Mutter ein Stapel von drei Ringen (28', 28", 28"') ist, angeordnet im Wesentlichen quer zu der Achse auf einer ringförmigen Stirnfläche (58) der Endmanschette, wobei eine interne Bohrung (56', 56", 56"') durch jeden entsprechenden Ring im Wesentlichen koaxial mit der Achse ist, wobei eine Seite jedes Ringes mit der Endmanschette mittels einer entsprechenden Rippe (54', 54", 54"') verbunden ist, wobei die Rippen (54', 54", 54"') der Ringe (28', 28", 28'") in gleichwinkligen Intervallen um die Achse (A) angeordnet sind, und wobei die Rippen (54', 54", 54'") integral mit den Ringen (28', 28", 28"') und der Endmanschette (16) ausgebildet sind.

2. Ein Metallwandanker wie in Anspruch 1 beansprucht, wobei die Länge jeder Rippe (54', 54", 54"') der axialen Entfernung zwischen der ringförmigen Stirnfläche (58) der Endmanschette (16) und dem entsprechenden Ring (28', 28", 28"'), mit dem jede Rippe verbunden ist, entspricht.

3. Ein Metallwandanker wie in einem der vorhergehenden Ansprüche beansprucht, wobei jeder Ring (28', 28") des Stapels eine Vertiefung (60", 60a"', 60b"') aufweist, um die Rippe (54", 54'") jedes Ringes (28", 28"'), der nachfolgend auf der ringförmigen Stirnfläche (58) der Endmanschette (16) gestapelt wird, aufzunehmen.

4. Ein Metallwandanker wie in einem der vorhergehenden Ansprüche beansprucht, wobei die Ringe (28', 28", 28"') flache ringförmige Stirnflächen, die im Wesentlichen quer zu der Achse (A) angeordnet sind, aufweisen.

5. Ein Metallwandanker wie in einem der vorhergehenden Ansprüche beansprucht, wobei die Kopfmanschette (14) zumindest ein Greifelement (40) aufweist.

6. Ein Metallwandanker wie in einem der vorhergehenden Ansprüche beansprucht, wobei die Stäbe (18) plastisch deformierbar sind, um sich von der Achse (A) weg zu biegen.

7. Ein Metallwandanker wie in einem der vorhergehenden Ansprüche beansprucht, wobei der Metallwandanker aus einem Stück Blech (12) gefertigt ist.

8. Eine Anordnung eines Metallwandankers (10) nach einem der Ansprüche 1 bis 7 und einer Schraube (100) mit einem Gewindeschaft (102) angeordnet in den internen freien Durchgängen (20, 22, 24) des Wandankers, wobei die Schraube einen transversalen Kopf (104) zur Anlage mit dem transversalen Kopfflansch (26) der Kopfmanschette (14) aufweist und der Gewindeschaft ein verjüngtes Ende (102a) zum Führen des Gewindeschafts in Verbindung mit den drei Ringen (28', 28", 28"'), wenn die Schraube gedreht wird, aufweist.

9. Die Anordnung wie in Anspruch 8 beansprucht, wobei die Schraube (100) eine Holzschraube ist.

10. Ein Verfahren zum Herstellen eines Wandankers nach einem der Ansprüche 1 bis 7, umfassend die Schritte:
(i) schrittweise Stanzen und Schneiden eines Blechstreifens (12), um Umrissformen der Kopfmanschette (14), des transversalen Kopfflansches (26), der länglichen Stäbe (18), der Endmanschette (16) und der drei Ringe (28', 28", 28'") zu bilden;
(ii) schrittweise Biegen der Kopfmanschette, der länglichen Stäbe und der Endmanschette um die Längsachse, um eine im Wesentlichen zylindrische Form zu bilden;
(iii) Falten der Kopfmanschette um im Wesentlichen quer zu der Achse zu liegen; und
(iv) nachfolgend Falten jeden der drei Ringe um eine entsprechende Rippe (54', 54", 54"'), um einen Stapel von drei Ringen, die im Wesentlichen quer zu der Achse (A) auf einer ringförmigen Stirnfläche (58) der Endmanschette angeordnet sind, zu bilden.

11. Ein Verfahren zum Herstellen eines Wandankers nach Anspruch 10, wobei das Blech mit einem Antikorrosionsmaterial vorbeschichtet ist.

## Revendications

1. Ancrage mural métallique (10) pour une vis (100), l'ancrage mural comprenant :
un axe longitudinal (A) ;
une collerette de tête cylindrique (14) située au niveau d'une extrémité ;
une collerette de queue cylindrique (16) située au niveau d'une extrémité opposée ; et
une pluralité de barres sensiblement longitudinales (18) pouvant être déformées de façon plastique qui relient la collerette de tête à la collerette de queue,
dans lequel la collerette de tête a un passage libre interne (20) pour un fût fileté (102) d'une vis et une bride de tête transversale (26) pour venir en butée avec une tête transversale (104) d'une vis,
dans lequel la collerette de queue a un passage libre interne (22) pour un fût fileté d'une vis et un écrou (28) pour mise en prise avec un fût fileté d'une vis,
dans lequel les barres sont réparties de manière uniforme autour d'un passage libre interne (24) pour un fût fileté d'une vis, et
dans lequel les passages libres internes (20, 22, 24) de l'ancrage mural sont sensiblement coaxiaux avec l'axe,
**caractérisé en ce que** l'écrou est un empilement de trois bagues (28', 28", 28"') agencés sensiblement transversalement à l'axe sur une face d'extrémité annulaire (58) de la collerette de queue, dans lequel
un trou interne (56', 56", 56"') à travers chaque bague respective est sensiblement coaxial avec l'axe, dans lequel un côté de chaque bague est relié à la collerette de queue par une âme respective (54', 54", 54'''), dans lequel les âmes (54', 54", 54"') des bagues (28', 28", 28"') sont agencées à des intervalles équiangles autour de l'axe (A), et dans lequel les âmes (54', 54", 54"') sont d'un seul tenant avec les bagues (28', 28", 28"') et la collerette de queue (16).

2. Ancrage mural métallique selon la revendication 1, dans lequel la longueur de chaque âme (54', 54", 54"') correspond à la distance axiale entre la face d'extrémité annulaire (58) de la collerette de queue (16) et la bague respective (28', 28", 28"') à laquelle chaque âme est reliée.

3. Ancrage mural métallique selon n'importe laquelle des revendications précédentes, dans lequel chaque bague (28', 28") de l'empilement a une partie en retrait (60", 60a"', 60b"') pour loger l'âme (54", 54"') de chaque bague (28", 28"') empilée par la suite sur la face d'extrémité annulaire (58) de la collerette de queue (16).

4. Ancrage mural métallique selon n'importe laquelle des revendications précédentes, dans lequel les bagues (28', 28", 28") ont des faces annulaires plates agencées sensiblement transversalement à l'axe (A).

5. Ancrage mural métallique selon n'importe laquelle des revendications précédentes, dans lequel la collerette de tête (14) a au moins un élément de saisie (40).

6. Ancrage mural métallique selon n'importe laquelle des revendications précédentes, dans lequel les barres (18) peuvent être déformées de façon plastique pour se plier loin de l'axe (A).

7. Ancrage mural métallique selon n'importe laquelle des revendications précédentes, dans lequel l'ancrage mural métallique est fait d'une seule pièce en tôle (12).

8. Ensemble d'un ancrage mural métallique (10) selon n'importe laquelle des revendications 1 à 7 et une vis (100) avec un fût fileté (102) disposé dans les passages libres internes (20, 22, 24) de l'ancrage mural, dans lequel la vis a une tête transversale (104) pour venir en butée avec la bride de tête transversale (26) de la collerette de tête (14) et le fût fileté a une extrémité tronconique (102a) pour mener le fût fileté en prise avec les trois bagues (28', 28", 28") lorsque la vis est mise en rotation.

9. Ensemble selon la revendication 8, dans lequel la vis (100) est une vis à bois.

10. Procédé de fabrication d'un ancrage mural selon n'importe laquelle des revendications 1 à 7, comprenant les étapes consistant à :
(i) progressivement perforer et découper une bande de tôle (12) pour former les formes de contour de la collerette de tête (14), la bride de tête transversale (26), les barres longitudinales (18), la collerette de queue (16) et les trois bagues (28', 28", 28"') ;
(ii) progressivement plier la collerette de tête, les barres longitudinales et la collerette de queue autour de l'axe longitudinal pour former une forme sensiblement cylindrique ;
(iii) plier la bride de tête pour se situer sensiblement transversalement à l'axe ; et
(iv) plier de manière séquentielle chacune des trois bagues autour d'une âme respective (54', 54", 54"') pour former un empilement de trois bagues agencées sensiblement transversalement à l'axe (A) sur une face d'extrémité annulaire (58) de la collerette de queue.

11. Procédé de fabrication d'un ancrage mural selon la revendication 10, dans lequel la tôle est revêtue à l'avance de matière anticorrosion.
